# EUROPEAN PATENT SPECIFICATION

(11) **EP 3 476 804 B1**
(45) Date of publication and mention of the grant of the patent: **13.05.2020**
(21) Application number: 17815111.4
(22) Date of filing: 30.05.2017
(51) Int. Cl.: C01B 35/06

(54) **METHOD FOR PRODUCING BORON TRICHLORIDE**
VERFAHREN ZUR HERSTELLUNG VON BORTRICHLORID
PROCÉDÉ DE PRODUCTION DE TRICHLORURE DE BORE

(30) Priority: 23.06.2016 JP 2016124910
(43) Date of publication of application: 01.05.2019
(73) Proprietor: Showa Denko K.K., Tokyo 105-8518 (JP)
(72) Inventor: MOURI, Saki, Tokyo 105-8518 (JP); KURIHARA, Hideyuki, Tokyo 105-8518 (JP)
(74) Representative: Strehl Schübel-Hopf & Partner
(86) International application number: PCT/JP2017/020037
(87) International publication number: WO 2017/221642

(56) References cited:
- WO-A1-2005/056475
- DE-A1- 2 826 747
- GB-A- 2 304 104
- GB-A- 2 304 104
- JP-A- S5 622 626
- JP-A- S5 820 715
- JP-A- S56 114 818

## Description

### Technical Field

The present invention relates to a method for producing boron trichloride.

### Background Art

As a method for producing boron trichloride (BCl₃), a method of carrying boric acid (B(OH)₃) on activated carbon and allowing the boric acid-carrying activated carbon to react with chlorine gas (Cl₂) (for example, refer to PTLs 1 and 2), and a method of allowing boron carbide (B₄C) to react with chlorine gas (for example, refer to PTL 3) have been known. In these methods for producing boron trichloride, in a case where water is present in the reaction system, there is a problem in that the produced boron trichloride is hydrolyzed to lower the production efficiency of boron trichloride. In addition, there is another problem that boric acid or boron oxide formed by hydrolysis of boron trichloride is likely to block the production line of boron trichloride.

Therefore, in the method for producing boron trichloride disclosed in PTL 1, water contained in the boric acid and the activated carbon is removed by treating the boric acid with an inert gas at a high temperature before the boric acid is allowed to react with the chlorine gas. However, in this method, there is a concern that a long period of time is required until water is sufficiently removed and determination of the completion of dehydration is difficult.

In addition, in the method for producing boron trichloride disclosed in PTL 2, water contained in the boric acid and the activated carbon is removed by sequentially treating the boric acid with an inert gas and then with chlorine gas at high temperature before the boric acid is allowed to react with the chlorine gas. However, a reaction between the boric acid and the chlorine gas occurs at about 300°C and generation of boron trichloride starts. Thus, the temperature at the time of water removal using the chlorine gas is limited to 290°C but there is a concern that water may not be sufficiently removed at 290°C.

Further, in the method for producing boron trichloride disclosed in PTL 3, a temperature at which the generation of boron trichloride starts by the reaction between the boron carbide and the chlorine gas is about 400°C and thus it seems possible to remove water of the boron carbide by chlorine gas at a temperature higher than in the method for producing boron trichloride disclosed in PTL 2 before the boron carbide is allowed to react with chlorine gas. However, in PTL 3, there is no description of water removal of boron carbide.

### Citation List

### Patent Literature

PTL 1: JP 2010-111550 A
PTL 2: JP 58-20715 A
PTL 3: JP 2009-227517 A
GB 2 304 104 A discloses a method for producing boron trichloride by a reaction between boron carbide and chlorine gas, the method comprising bringing a gas which has a water content of 1 ppm by volume or less into contact with boron carbide and allowing the boron carbide to react with chlorine gas to generate boron trichloride.

### Summary of Invention

### Technical Problem

The present invention is made to solve the problems of the related arts described above and an object of the present invention is to provide a method for producing boron trichloride capable of efficiently producing boron trichloride by suppressing the generation of byproducts resulting from water by sufficiently removing water from a reaction system.

### Solution to Problem

In order to achieve the above objects, an aspect of the present invention includes the following [1] to [8].
[1] A method for producing boron trichloride by a reaction between boron carbide and chlorine gas, the method including:
   bringing a chlorine-containing gas, which contains chlorine gas and has a water content of 1 ppm by volume or less, into contact with boron carbide at a temperature of 300°C or higher and 400°C or lower, and allowing water contained in the boron carbide to react with the chlorine gas in the chlorine-containing gas to remove the water contained in the boron carbide; and
   allowing the boron carbide dehydrated in the bringing of the chlorine-containing gas to react with the chlorine gas to generate boron trichloride.
[2] The method for producing boron trichloride according to [1],
   in which the chlorine-containing gas is brought into contact with a desiccant containing zeolite.
[3] The method for producing boron trichloride according to any one of [1] or [2],
   in which the bringing of the chlorine-containing gas is carried out under a pressure lower than atmospheric pressure.
[4] The method for producing boron trichloride according to any one of [1] to [3],
   in which the chlorine-containing gas includes 20% by volume or more and 60% by volume or less of chlorine gas, and a remainder of inert gas.
[5] The method for producing boron trichloride according to [4],
   in which the inert gas is at least one of nitrogen gas, argon, or helium.
[6] The method for producing boron trichloride according to any one of [1] to [5],
   in which the boron carbide is a powder of which 100% by mass passes through a dry sieve having a mesh opening of 5.60 mm and 65% by mass or more does not pass through a dry sieve having a mesh opening of 1 mm.
[7] The method for producing boron trichloride according to any one of [1] to [6],
   in which a reaction temperature between the boron carbide and the chlorine gas in the allowing of the boron carbide is 800°C or higher and 1100°C or lower.
[8] The method for producing boron trichloride according to any one of [1] to [7], further including:
   carrying out the bringing of the chlorine-containing gas in a reaction vessel and measuring an amount of at least one of water or hydrogen chloride in a discharge gas discharged during the bringing of the chlorine-containing gas from the reaction vessel to evaluate a water content in the reaction vessel.

### Advantageous Effects of Invention

According to the present invention, it is possible to efficiently produce boron trichloride by suppressing the generation of byproducts resulting from water by sufficiently removing water from a reaction system.

### Brief Description of Drawings

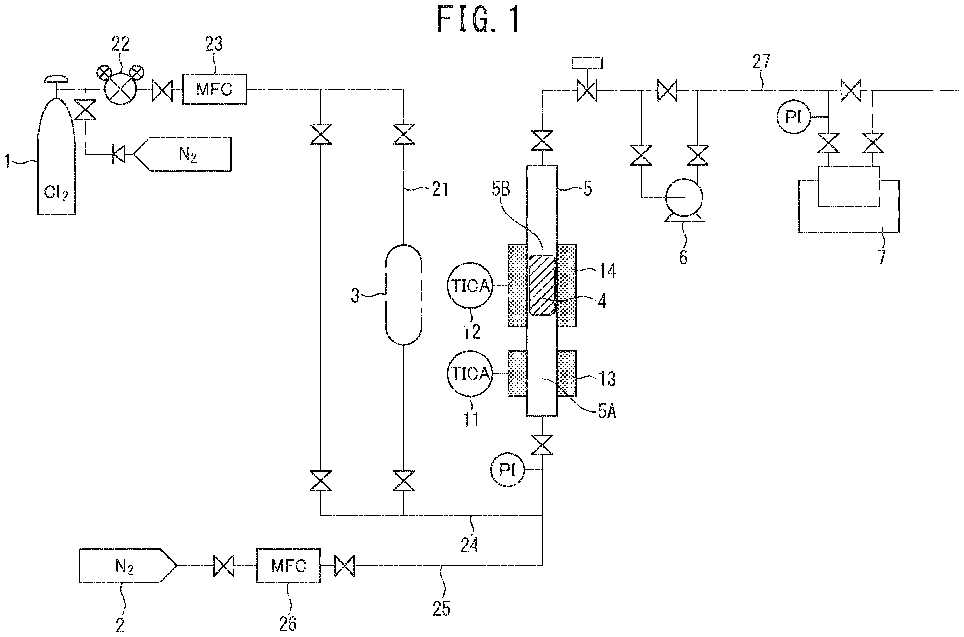

FIG. 1 is a schematic view of a boron trichloride production apparatus for describing a method for producing boron trichloride according to an embodiment of the present invention.

### Description of Embodiments

When boron trichloride is produced by allowing boron carbide to react with chlorine gas, in a case where there is water in the reaction system, the generated boron trichloride is hydrolyzed and boric acid and boron oxide are generated as by products. Accordingly, in a case where the water content in the chlorine gas or the water content in the boron carbide is high, the yield of boron trichloride decreases and there is a concern of blocking caused by byproducts in the production line of boron trichloride.

As a result of conducting intensive investigations, the present inventors have found a method capable of, in a case where boron trichloride is produced by allowing boron carbide to react with chlorine gas, sufficiently removing water contained in the boron carbide by the chlorine gas, and thus have completed the present invention.

The reaction in which boron trichloride is hydrolyzed to form boric acid is expressed by the following formula.

BCl₃+3H₂O → B(OH)₃+3HCl

In addition, the reaction between chlorine gas and water occurring in a case where water is removed by the chlorine gas or the like is expressed by the following formula.

Cl₂+H₂O → HClO+HCl

Hereinafter, an embodiment of the present invention will be described.

A method for producing boron trichloride of an embodiment is a method for producing boron trichloride by a reaction between boron carbide and chlorine gas, and includes a dehydration step of removing water contained in boron carbide by chlorine gas and a generation step of allowing the boron carbide dehydrated in the dehydration step to react with the chlorine gas to generate boron trichloride.

The dehydration step is a step of bringing a chlorine-containing gas which contains chlorine gas and has a water content of 1 ppm by volume or less into contact with boron carbide at a temperature lower than a generation starting temperature at which the generation of the boron trichloride starts by a reaction between the boron carbide and the chlorine gas, and allowing the water contained in the boron carbide to react with the chlorine gas in the chlorine-containing gas to remove the water contained in the boron carbide.

According to the method for producing boron trichloride of the embodiment, since the water contained in boron carbide is allowed to react with the chlorine gas at a temperature lower than a generation starting temperature at which the generation of the boron trichloride starts by the reaction between the boron carbide and the chlorine gas, in the dehydration step, it is possible to sufficiently remove the water contained in the boron carbide by the chlorine gas. Accordingly, the water in the reaction system is sufficiently removed and thus hydrolysis of the generated boron trichloride is suppressed. Therefore, it is possible to efficiently produce boron trichloride in high yield. In addition, since the generation of boric acid and boron oxide which are byproducts resulting from water is suppressed, blocking of the production line of boron trichloride does not easily occur. Therefore, it is not necessary to frequently carry out work for removing boric acid and boron oxide adhering to the boron trichloride production line.

In the present invention, the expression "generation starting temperature at which the generation of the boron trichloride starts by the reaction between the boron carbide and the chlorine gas" means a temperature at which the proportion of the amount of boron trichloride generated by the reaction between boron carbide and chlorine gas within a residence time of the dehydration step is more than 0.5% by volume with respect to a total amount of 100% by volume of reactants (boron carbide and chlorine gas) and a reaction product (boron trichloride). In a case where the reactants and the reaction product pass through a reaction vessel at a space velocity of, for example, 100/h, 1/100 hours can be set to the residence time. The space velocity can be selected in a range of typically, 100/h to 800/h.

Since the generation starting temperature is typically 400°C or lower, the temperature at which the chlorine-containing gas is brought into contact with the boron carbide in the dehydration step is 300°C or higher and 400°C or lower, and preferably 350°C or higher and 390°C or lower. At a temperature of 300°C or higher, the reaction between the chlorine gas and water easily occurs and thus the dehydration efficiency is increased. At a temperature of 400°C or lower, the reaction between the boron carbide and chlorine gas does not easily occur.

In the dehydration step, in a case where the chlorine-containing gas is brought into contact with the boron carbide, a chlorine-containing gas at normal temperature without heating may be brought into contact with boron carbide heated to, for example, 300°C or higher, but a chlorine-containing gas heated to, for example, 300°C or higher in advance may be brought into contact with boron carbide heated to, for example, 300°C or higher. Before the chlorine-containing gas is brought into contact with the boron carbide, the reaction rate of the chlorine gas and water can be increased by heating the chlorine-containing gas, and thus the treatment time of the dehydration step can be shortened.

The water content of the chlorine-containing gas used in the dehydration step is 1 ppm by volume or less, but in a case where the water content is 1 ppm by volume or less, a metal member with which the chlorine-containing gas comes into contact is not easily corroded and the water of the boron carbide can be sufficiently removed. Therefore, in a case where chlorine gas is used as the chlorine-containing gas used in the dehydration step, it is preferable to use a chlorine gas having a purity of 99.999% by volume or higher.

A method for setting the water content of the chlorine-containing gas used in the dehydration step to 1 ppm by volume or less is not particularly limited and for example, a method for carrying out drying using a desiccant may be used. Specifically, the above method is a method in which the chlorine-containing gas having a water content of more than 1 ppm by volume is brought into contact with a desiccant, the water in the chlorine-containing gas is absorbed by the desiccant, and the water content of the chlorine-containing gas is set to 1 ppm by volume or less. For example, an industrial chlorine gas containing a high water content can be dried by bringing the chlorine gas into contact with the desiccant and the water content can be set to 1 ppm by volume or less.

As an example of the desiccant, zeolite may be used and specific examples thereof include MOLECULAR SIEVE 3A, MOLECULAR SIEVE 4A, high silica zeolite AW300, and high silica zeolite AW500. The zeolite may be used alone or in combination of two or more thereof. In addition, the desiccant may contain components other than the zeolite.

For example, the water content of the chlorine-containing gas can be calculated from the light absorbance of hydrogen chloride measured using a Fourier transform infrared spectrometer (FT-IR). As the Fourier transform infrared spectrometer, for example, Nicolet iS10 FT-IR manufactured by Thermo Fisher Scientific Co., Ltd. can be used.

As long as the chlorine-containing gas used in the dehydration step contains chlorine gas and has a water content of 1 ppm by volume or less, the content of the chlorine gas is not particularly limited. The chlorine gas may be used as the chlorine-containing gas, or a mixed gas constituted of chlorine gas and an inert gas may be used. The kind of the inert gas is not particularly limited, but at least one of nitrogen gas, argon, or helium may be used. The proportion of chlorine gas in the chlorine-containing gas may be 20% by volume or more and 60% by volume or less, is more preferably 30% by volume or more and 50% by volume or less and even more preferably 40% by volume or more and 50% by volume or less. In a case where the proportion of chlorine gas in the chlorine-containing gas is within the above range, the water of the boron carbide can be sufficiently and efficiently removed.

Although the flow rate of the chlorine-containing gas which is brought into contact with the boron carbide in the dehydration step depends on the size of a vessel used in the dehydration step, in a case where the volume of the vessel is 200 to 300 cm³, for example, the flow rate may be 200 ccm (cm³/min) or more and 2000 ccm or less and is more preferably 800 ccm or more and 1300 ccm or less.

Further, the method for producing boron trichloride of the embodiment may further include, in addition to the dehydration step and the generation step, a water content evaluation step of evaluating a water content in the reaction vessel in which the dehydration step is carried out. That is, the dehydration step may be carried out in the reaction vessel, and an amount of at least one of water or hydrogen chloride in a discharge gas discharged during the dehydration step from the reaction vessel may be measured to evaluate a water content in the reaction vessel in which the dehydration step is carried out.

In a case where the method includes the water content evaluation step, it is possible to determine the completion of the dehydration step (that is, to determine that the water in the boron carbide is sufficiently removed). For example, at least one of the water concentration or the hydrogen chloride concentration in the discharge gas discharged from the vessel used in the dehydration step may be measured and the time at which the water concentration reaches 10 ppm by volume or less or the hydrogen chloride concentration reaches 10 ppm by volume or less may be taken as the completion of the dehydration step.

The water concentration and the hydrogen chloride concentration in the discharge gas discharged from the vessel used in the dehydration step can be calculated from the light absorbance of hydrogen chloride measured using, for example, a Fourier transform infrared spectrometer. The water concentration and the hydrogen chloride concentration can be calculated by randomly selecting an absorption wavelength of water and hydrogen chloride. However, in a case where a suitable treatment time for the dehydration step is known from the previous results, the completion of the dehydration step may be determined based on the previous results without measuring the water concentration and the hydrogen chloride concentration.

The dehydration step may be carried out under atmospheric pressure or under a pressure higher than atmospheric pressure but may be carried out under a pressure lower than atmospheric pressure. For example, the dehydration step may be carried out under a reduced pressure of -0.090 MPaG or more and -0.010 MPaG or less. In a case where the chlorine-containing gas is brought into contact with the boron carbide under a pressure lower than atmospheric pressure, the effect of removing water in the boron carbide is improved and the effect of removing hydrogen chloride and hypochlorous acid generated by the reaction between water and chlorine gas is also improved. Thus, it is possible to shorten the treatment time of the dehydration step.

In the dehydration step, boron carbide may be charged in the reaction vessel and the chlorine-containing gas may be brought into contact with the boron carbide in the reaction vessel to allow the water in the boron carbide and the chlorine gas in the chlorine-containing gas to react with each other.

The reaction vessel in which the water in the boron carbide is removed in the dehydration step and the reaction vessel in which the reaction between the boron carbide and the chlorine gas is carried out in the generation step may be the same vessel or may be different vessels. That is, both the dehydration step and the generation step may be carried out in one reaction vessel or after the dehydration step is carried out in a first reaction vessel, the boron carbide may be moved from the first reaction vessel to a second reaction vessel to carry out the generation step. In addition, the shape of the reaction vessel is not particularly limited and for example, the reaction vessel may have a tubular or spherical shape. Further, the material of the reaction vessel used in the dehydration step and/or generation step is not particularly limited as long as the material is not corroded by chlorine gas, boron trichloride, hydrogen chloride, or the like. For example, graphite or metal may be used.

A boron carbide powder can be used, but a boron carbide powder of which 100% by mass passes through a dry sieve having a mesh opening of 5.60 mm and 65% by mass or more does not pass through a dry sieve having a mesh opening of 1 mm may be used. In a case where the particle diameter of the boron carbide powder is 5.60 mm or less, the surface area becomes large and thus the reaction rate with the chlorine gas is increased. In addition, in a case where the particle diameter of the boron carbide powder is 5.60 mm or less, closest packing of the reaction vessel used in the dehydration step and the generation step is easily achieved and thus the productivity of boron trichloride is increased.

On the other hand, in a case where the amount of particles having a particle diameter of more than 1 mm is 65% by mass or more, the amount of particles having a small particle diameter is small and thus the boron carbide powder is easily scattered by the chlorine-containing gas flowing during the dehydration step, during the generation step, or after the generation step. Accordingly, it is difficult for the boron carbide powder to flow out from the reaction vessel in which the water in the boron carbide is removed in the dehydration step and the reaction vessel in which the reaction between the boron carbide and the chlorine gas is carried out in the generation step. The particle diameter of the boron carbide powder is more preferably 1 mm or more and 5 mm or less and even more preferably 1 mm or more and 3 mm or less.

The reaction temperature of the boron carbide and the chlorine gas in the generation step may be 800°C or higher and 1100°C or lower and more preferably 900°C or higher and 1000°C or lower. In a case where the reaction temperature of the boron carbide and the chlorine gas in the generation step is the above temperature, the generation rate of boron trichloride is sufficiently increased and also a metal member around the reaction vessel in which the generation step is carried out is not easily damaged.

As chlorine gas to react to boron carbide in the generation step, a chlorine-containing gas can be used as in the dehydration step and only the chlorine gas may be used or a mixed gas constituted of chlorine gas and an inert gas may be used. In the generation step and the dehydration step, the same kind of chlorine-containing gas may be used or different kinds of chlorine-containing gases may be used. That is, in the generation step and the dehydration step, the proportion of chlorine gas in the chlorine-containing gas may be the same as or different from each other.

Hereinafter, the method for producing boron trichloride of the embodiment will be described in more detail with reference to FIG. 1 illustrating an example of a boron trichloride production apparatus. In FIG. 1, in order to facilitate understanding of the features of the present invention, for the sake of convenience of description, the main part may be enlarged in some cases, and the dimensional ratio and the like of each constituent element illustrated in FIG. 1 is not necessarily the same as those of the actual boron trichloride production apparatus.

The boron trichloride production apparatus in FIG. 1 includes a chlorine gas vessel 1 (for example, a cylinder) which is filled with chlorine gas, a nitrogen gas vessel 2 (for example, a cylinder) which is filled with nitrogen gas as an inert gas, a drying tower 3 which is filled with a desiccant containing zeolite, a graphite tubular reaction vessel 5 in which a boron carbide powder 4 is charged, a vacuum pump 6 which depressurizes the inside of the boron trichloride production apparatus, and a Fourier transform infrared spectrometer 7 which analyzes boron trichloride, water, hydrogen chloride, and the like in the gas.

In the upstream part of the tubular reaction vessel 5, a preheating section 5A for preheating the gas is provided and in the downstream part of the tubular reaction vessel 5, a reaction section 5B in which the boron carbide powder 4 is charged is provided so as to communicate with the preheating section 5A. The preheating section 5A and the reaction section 5B are temperature-controlled by heaters 11 and 12, respectively, and are covered with heat insulating materials 13 and 14, respectively, to be kept warm.

In a case where boron trichloride is produced, first, chlorine gas is introduced from the chlorine gas vessel 1 to the drying tower 3 through a pipe 21. At that time, while adjusting the supply pressure of the chlorine gas by a regulator 22, the flow rate of the chlorine gas is adjusted by a mass flow controller 23. The chlorine gas introduced into the drying tower 3 is brought into contact with a desiccant, and the water contained in the chlorine gas is adsorbed to the desiccant. The water content of the chlorine gas after drying is 1 ppm by volume or less. However, in a case where a chlorine gas having a water content of 1 ppm by volume or less is used, the chlorine gas may not be introduced into the drying tower 3.

The chlorine gas dried to have a water content of 1 ppm by volume or less is sent to the tubular reaction vessel 5 through a pipe 24, but in the middle part of the pipe 24 (that is, in the upstream side of the tubular reaction vessel 5), the chlorine gas is mixed with nitrogen gas and becomes a mixed gas of chlorine gas and nitrogen gas. That is, a pipe 25 communicating with the nitrogen gas vessel 2 and a middle part of the pipe 24 is disposed and nitrogen gas is introduced from the nitrogen gas vessel 2 to the middle part of the pipe 24 through the pipe 25 so that the chlorine gas and the nitrogen gas are mixed with each other. At this time, since the flow rate of the nitrogen gas can be adjusted by the mass flow controller 26, the proportion of chlorine gas in the mixed gas can be adjusted by the mass flow controller 26. In a case where nitrogen gas having a water content of 1 ppm by volume or less is used, the water content of the mixed gas is 1 ppm by volume or less.

The mixed gas of chlorine gas and nitrogen gas is sent to the tubular reaction vessel 5 through the piping 24 and first introduced into the preheating section 5A. Then, in the preheating section 5A, the mixed gas is heated by the heater 11 to a desired temperature (for example, the same temperature as the temperature of boron carbide in the dehydration step). The preheated mixed gas moves to the downstream side in the tubular reaction vessel 5 and is sent to the reaction section 5B. However, the mixed gas may not be preheated and the mixed gas at normal temperature may be introduced into the reaction section 5B.

The boron carbide powder 4 is charged in the reaction section 5B, and the reaction section 5B is heated by the heater 12 to a temperature lower than a generation starting temperature at which the generation of the boron trichloride starts by the reaction between the boron carbide and the chlorine gas (for example, 300°C or higher and 400°C or lower) . Since the preheated mixed gas is sent to the reaction section and comes into contact with the boron carbide powder 4, the water contained in the boron carbide powder 4 is allowed to react with the chlorine gas in the mixed gas to remove the water contained in the boron carbide powder 4 (dehydration step). The dehydration step may be carried out under atmospheric pressure or under a pressure lower than atmospheric pressure. In a case where the dehydration step is carried out under a pressure lower than atmospheric pressure, the pressure of the inside of the boron trichloride production apparatus may be reduced using the vacuum pump 6.

After the removal of water from the boron carbide powder 4 is completed, the chlorine gas is prevented from being introduced from the chlorine gas vessel 1, the gas flowing inside of the boron trichloride production apparatus is changed so that only nitrogen gas is used, and the gas in the tubular reaction vessel 5 is replaced with nitrogen gas. Then, the reaction section 5B is heated by the heater 12 and the temperature of the boron carbide powder 4 is increased to a temperature equal to or higher than the generation starting temperature (for example, 800°C or higher and 1100°C or lower). When the temperature of the boron carbide powder 4 is a temperature equal to or higher than the generation starting temperature, chlorine gas is introduced from the chlorine gas vessel 1 again. Here, the reaction between the boron carbide and the chlorine gas starts to generate boron trichloride (generation step). The generated boron trichloride is sent from the tubular reaction vessel 5 by the mixed gas and is removed from the boron trichloride production apparatus through a pipe 27.

Since the boron trichloride production apparatus of the embodiment includes the Fourier transform infrared spectrometer 7, some of the gas passing through the pipe 27 can be drawn into the Fourier transform infrared spectrometer 7 to analyze the boron trichloride in the gas. Thus, the yield amount and the yield of the boron trichloride can be calculated. In addition, by analyzing the water and the hydrogen chloride in the gas, the water content in the tubular reaction vessel 5 can be evaluated (water content evaluation step) . Accordingly, by measuring the amount of at least one of water or hydrogen chloride in the discharge gas discharged during the dehydration step from the tubular reaction vessel 5, it is possible to determine the completion of the dehydration step (that is, to determine that the water in the boron carbide powder 4 is sufficiently removed).

The boron trichloride produced as described above contains impurities in some cases. Examples of impurities include oxygen gas, nitrogen gas, carbon dioxide, carbon monoxide, methane, hydrogen gas, helium, hydrogen chloride, chlorine gas, and silicon tetrachloride. These impurities can be removed by purification method such as distillation and thus, it is possible to produce high purity boron trichloride with little impurities purified by, for example, distillation.

### [Examples]

Hereinafter, the present invention will be described in more detail with reference to examples and comparative examples.

### [Example 1]

The same operations as in the embodiment were carried out using the same boron trichloride production apparatus as the boron trichloride production apparatus in FIG. 1 to produce boron trichloride by allowing boron carbide to react with chlorine gas. As a chlorine-containing gas, a commercially available high purity chlorine gas having a purity of 99.999% by volume and a water content of 0.9 ppm by volume was used. In a case of measuring the particle diameter with a dry sieve, as the boron carbide, a powder of which 100% by mass passed through a dry sieve having a mesh opening of 5.60 mm and 65% by mass or more did not pass through a dry sieve having a mesh opening of 1 mm was used.

20 g of the boron carbide powder was charged in a graphite tubular reaction vessel (an inner diameter is 22 mm, a height is 700 mm, and a volume of a reaction section filled with boron carbide is 19 cm³), and while allowing nitrogen gas to flow into the tubular reaction vessel at a flow rate of 500 ccm, the boron carbide was heated to 390°C for 15 minutes. Thereafter, the gas flowing in the tubular reaction vessel was changed from the nitrogen gas to the chlorine-containing gas (high purity chlorine gas), the chlorine-containing gas was allowed to flow (at a follow rate of 500 ccm) at normal temperature for 1 hour under atmospheric pressure, and water contained in the boron carbide and the chlorine gas were allowed to react with each other to carry out a dehydration treatment of removing the water contained in the boron carbide.

During the dehydration treatment, the discharge gas discharged from the tubular reaction vessel was drawn into a Fourier transform infrared spectrophotometer, and the discharge gas was subjected to infrared spectroscopic analysis. Then, by confirming that the concentration of boron trichloride in the discharge gas after the dehydration treatment was 0.5% by volume or less and the concentration of hydrogen chloride was reduced to 10 ppm by volume or less, it was determined that removal of the water contained in the boron carbide was completed, and the dehydration treatment was completed.

Next, the gas flowing through the tubular reaction vessel was changed from the chlorine-containing gas to nitrogen gas, and the gas in the tubular reaction vessel was replaced with nitrogen gas. Then, after the boron carbide was heated to 900°C, the chlorine-containing gas (high purity chlorine gas) was allowed to flow to the tubular reaction vessel (at a flow rate of 200 ccm) at normal temperature under atmospheric pressure, and the dehydrated boron carbide was allowed to react with chlorine gas to generate boron trichloride. During the reaction, the discharge gas discharged from the tubular reaction vessel was drawn into the Fourier transform infrared spectrophotometer and subjected to infrared spectroscopic analysis to measure the concentration of boron trichloride and the concentration of hydrogen chloride in the discharge gas.

The reaction was completed in 6 hours, and the amount of boron trichloride obtained was 167 g. The time at which the amount of boron trichloride generated by the analysis result of the Fourier transform infrared spectrophotometer turned to decrease was taken as the completion of reaction and the yield was set to a value obtained by dividing the yield amount of boron trichloride calculated from the integrated value of generated boron trichloride by the theoretical generation amount of boron trichloride calculated from the mass reduction amount before and after the reaction of the boron carbide. The yield was 99% by mass. In addition, the amount of by-produced hydrogen chloride was 1 mg.

### [Example 2]

Reaction was carried out in the same manner as in Example 1 except that as the chlorine-containing gas used in the dehydration treatment of the boron carbide, instead of using a high purity chlorine gas, the following chlorine gas was used. That is, a commercially available industrial chlorine gas having a purity of 99.9% by volume and a water content of 5 ppm by volume was allowed to pass through a SUS cylinder filled with 1 L of molecular sieves 3A to reduce the water content to 1 ppm by volume or less. The obtained chlorine gas was used as the chlorine-containing gas.

As a result, the reaction was completed in 6 hours, the amount of obtained boron trichloride was 167 g, and the yield was 99% by mass. In addition, the amount of by-produced hydrogen chloride was 1 mg.

### [Example 3]

Reaction was carried out in the same manner as in Example 1 except that as the chlorine-containing gas used in the dehydration treatment of the boron carbide, instead of using a high purity chlorine gas, the following gas was used. That is, a mixed gas obtained by mixing a commercially available high purity chlorine gas and nitrogen gas in equal amounts and having a water content of 1 ppm by volume or less was used as the chlorine-containing gas.

As a result, the reaction was completed in 6 hours, the amount of obtained boron trichloride was 167 g, and the yield was 99% by mass. In addition, the amount of by-produced hydrogen chloride was 1 mg.

### [Example 4]

In Example 1, the dehydration treatment of while allowing the chlorine-containing gas at normal temperature to flow to the tubular reaction vessel, heating the boron carbide to 390°C to remove the water contained in the boron carbide was carried out but in Example 4, a dehydration treatment of while allowing a chlorine-containing gas preheated to 390°C to the tubular reaction vessel, heating the boron carbide to 390°C to remove the water contained in the boron carbide was carried out. In addition, in Example 4, the time for the dehydration treatment was 40 minutes. Except for these points, the reaction was carried out in the same manner as in Example 1.

As a result, the reaction was completed in 6 hours, the amount of obtained boron trichloride was 167 g, and the yield was 99% by mass. In addition, the amount of by-produced hydrogen chloride was 1 mg.

### [Example 5]

In Example 1, the dehydration treatment was carried out under atmospheric pressure, but the dehydration treatment was carried out under a reduced pressure of -0.015 MPaG in Example 5. In addition, in Example 5, the flow rate of the chlorine-containing gas in the dehydration treatment was 150 ccm. The reaction was carried out in the same manner as in Example 1 except for these points.

As a result, the reaction was completed in 6 hours, the amount of obtained boron trichloride was 167 g, and the yield was 99% by mass. In addition, the amount of by-produced hydrogen chloride was 1 mg.

### [Example 6]

Reaction was carried out in the same manner as in Example 1 except that the temperature of the boron carbide during the dehydration treatment was changed from 390°C to 290°C.

As a result, the reaction was completed in 6 hours, the amount of obtained boron trichloride was 166 g, and the yield was 98% by mass. In addition, the amount of by-produced hydrogen chloride was 1.1 g. White crystals adhered to the outlet of the tubular reaction vessel after the completion of the reaction, and thus the white crystals were analyzed by powder X-ray diffraction measurement and differential thermal and thermogravimetric analysis. The white crystal was a mixture of boric acid and boric oxide.

### [Comparative Example 1]

Reaction was carried out in the same manner as in Example 1 except that the gas flowing during the dehydration treatment was changed from the chlorine-containing gas to nitrogen gas having a water content of 1 ppm by volume or less. That is, in Comparative Example 1, the dehydration treatment using the chlorine-containing gas was not carried out.

As a result, the reaction was completed in 6 hours, the amount of obtained boron trichloride was 161 g, and the yield was 95% by mass. In addition, the amount of by-produced hydrogen chloride was 2.6 g. White crystals adhered to the outlet of the tubular reaction vessel after the completion of the reaction, and thus the white crystals were analyzed by powder X-ray diffraction measurement and differential thermal and thermogravimetric analysis. The white crystal was a mixture of boric acid and boric oxide.

### [Comparative Example 2]

Reaction was carried out in the same manner as in Example 1 except that the chlorine-containing gas flowing during the dehydration treatment was changed from the high purity chlorine gas to a commercially available industrial chlorine gas having a water content of 5 ppm by volume.

As a result, the reaction was completed in 6 hours, the amount of obtained boron trichloride was 161 g, and the yield was 95% by mass. In addition, the amount of by-produced hydrogen chloride was 2.6 g. White crystals adhered to the outlet of the tubular reaction vessel after the completion of the reaction, and thus the white crystals were analyzed by powder X-ray diffraction measurement and differential thermal and thermogravimetric analysis. The white crystal was a mixture of boric acid and boric oxide.

### [Comparative Example 3]

The same operations as in the embodiment were carried out using the same boron trichloride production apparatus as the boron trichloride production apparatus in FIG. 1 to produce boron trichloride. However, instead of using the boron carbide, a mixture of boric acid and activated carbon was used to allow boric acid to react with chlorine gas to produce boron trichloride. As the chlorine-containing gas, a commercially available high purity chlorine gas having a purity of 99.999% by volume and a water content of 0.9 ppm by volume was used.

178 g of a mixture of 89 g of boric acid and 89 g of activated carbon was charged in the graphite tubular reaction vessel, and while allowing nitrogen gas to flow into the tubular reaction vessel at a flow rate of 500 ccm, the mixture was heated to 290°C for 15 minutes. Then, the gas flowing through the tubular reaction vessel was changed from nitrogen gas to a chlorine-containing gas (high purity chlorine gas), and the dehydration treatment of while allowing the chlorine-containing gas at normal temperature to flow under atmospheric pressure for 1 hour (at a flow rate of 500 ccm), causing a reaction between the water contained in the mixture and the chlorine gas to remove the water contained in the mixture was carried out.

During the dehydration treatment, the discharge gas discharged from the tubular reaction vessel was drawn into the Fourier transform infrared spectrophotometer and subjected to infrared spectroscopic analysis for the discharge gas. Then, by confirming that the concentration of boron trichloride in the discharge gas after the dehydration treatment was 0.5% by volume or less and the concentration of hydrogen chloride was reduced to 10 ppm by volume or less, it was determined that removal of the water contained in the mixture was completed, and the dehydration treatment was completed.

Next, the gas flowing through the tubular reaction vessel was changed from the chlorine-containing gas to nitrogen gas, and the gas in the tubular reaction vessel was replaced with nitrogen gas. Then, after the mixture was heated to 500°C, the chlorine-containing gas (high purity chlorine gas) was allowed to flow to the tubular reaction vessel (at a flow rate of 200 ccm) at normal temperature under atmospheric pressure, and the dehydrated mixture was allowed to react with chlorine gas to generate boron trichloride. During the reaction, the discharge gas discharged from the tubular reaction vessel was drawn into the Fourier transform infrared spectrophotometer and subjected to infrared spectroscopic analysis to measure the concentration of boron trichloride and the concentration of hydrogen chloride in the discharge gas.

As a result, the reaction was completed in 6 hours and the amount of the obtained boron trichloride was 161 g, and the yield was 95% by mass. In addition, the amount of by-produced hydrogen chloride was 2.6 g. White crystals adhered to the outlet of the tubular reaction vessel after the completion of the reaction, and thus the white crystals were analyzed by powder X-ray diffraction measurement and differential thermal and thermogravimetric analysis. The white crystal was a mixture of boric acid and boric oxide.

### Reference Signs List

- 1:: chlorine gas vessel
- 2:: nitrogen gas vessel
- 3:: drying tower
- 4:: boron carbide powder
- 5:: tubular reaction vessel
- 6:: vacuum pump
- 7:: Fourier transform infrared spectrometer

## Claims

1. A method for producing boron trichloride by a reaction between boron carbide and chlorine gas, the method comprising:
bringing a chlorine-containing gas, which contains chlorine gas and has a water content of 1 ppm by volume or less, into contact with boron carbide at a temperature of 300°C or higher and 400°C or lower, and allowing water contained in the boron carbide to react with the chlorine gas in the chlorine-containing gas to remove the water contained in the boron carbide; and
allowing the boron carbide dehydrated in the bringing of the chlorine-containing gas to react with the chlorine gas to generate boron trichloride.

2. The method for producing boron trichloride according to claim 1, wherein the chlorine-containing gas is brought into contact with a desiccant containing zeolite.

3. The method for producing boron trichloride according to claim 1 or 2, wherein the bringing of the chlorine-containing gas is carried out under a pressure lower than atmospheric pressure.

4. The method for producing boron trichloride according to any one of claims 1 to 3, wherein the chlorine-containing gas includes 20% by volume or more and 60% by volume or less of chlorine gas, and a remainder of inert gas.

5. The method for producing boron trichloride according to claim 4, wherein the inert gas is at least one of nitrogen gas, argon, or helium.

6. The method for producing boron trichloride according to any one of claims 1 to 5, wherein the boron carbide is a powder of which 100% by mass passes through a dry sieve having a mesh opening of 5.60 mm and 65% by mass or more does not pass through a dry sieve having a mesh opening of 1 mm.

7. The method for producing boron trichloride according to any one of claims 1 to 6, wherein a reaction temperature between the boron carbide and the chlorine gas in the allowing of the boron carbide is 800°C or higher and 1100°C or lower.

8. The method for producing boron trichloride according to any one of claims 1 to 7, further comprising:
carrying out the bringing of the chlorine-containing gas in a reaction vessel and measuring an amount of at least one of water or hydrogen chloride in a discharge gas discharged during the bringing of the chlorine-containing gas from the reaction vessel to evaluate a water content in the reaction vessel.

## Patentansprüche

1. Verfahren zur Herstellung von Bortrichlorid durch eine Reaktion zwischen Borcarbid und Chlorgas, wobei das Verfahren umfasst:
das Inkontaktbringen eines chlorhaltigen Gases, das Chlorgas enthält und einen Wassergehalt von 1 Volumen-ppm oder weniger hat, mit Borcarbid bei einer Temperatur von 300°C oder höher und 400°C oder niedriger, und Ermöglichen, dass das im Borcarbid enthaltene Wasser mit dem Chlorgas im chlorhaltigen Gas reagiert, um das im Borcarbid enthaltene Wasser zu entfernen; und
das Zulassen, dass das beim Einbringen des chlorhaltigen Gases dehydrierte Borcarbid mit dem Chlorgas unter Bildung von Bortrichlorid reagiert.

2. Verfahren zur Herstellung von Bortrichlorid nach Anspruch 1, wobei das chlorhaltige Gas mit einem zeolithhaltigen Trockenmittel in Kontakt gebracht wird.

3. Verfahren zur Herstellung von Bortrichlorid nach Anspruch 1 oder 2, wobei das Einbringen des chlorhaltigen Gases unter einem Druck unterhalb des Atmosphärendrucks erfolgt.

4. Verfahren zur Herstellung von Bortrichlorid nach einem der Ansprüche 1 bis 3, wobei das chlorhaltige Gas 20 Volumenprozent oder mehr und 60 Volumenprozent oder weniger Chlorgas und einen Rest an Inertgas enthält.

5. Verfahren zur Herstellung von Bortrichlorid nach Anspruch 4, wobei das Inertgas mindestens eines der Gase Stickstoff, Argon oder Helium ist.

6. Verfahren zur Herstellung von Bortrichlorid nach einem der Ansprüche 1 bis 5, wobei das Borcarbid ein Pulver ist, das zu 100 Masse-% durch ein Trockensieb mit einer Maschenöffnung von 5,60 mm und zu 65 Masse-% oder mehr nicht durch ein Trockensieb mit einer Maschenöffnung von 1 mm hindurchgeht.

7. Verfahren zur Herstellung von Bortrichlorid nach einem der Ansprüche 1 bis 6, wobei eine Reaktionstemperatur zwischen dem Borcarbid und dem Chlorgas beim Zulassen des Borcarbids 800°C oder höher und 1100°C oder niedriger ist.

8. Verfahren zur Herstellung von Bortrichlorid nach einem der Ansprüche 1 bis 7, das ferner umfasst:
das Durchführen des Einbringens des chlorhaltigen Gases in ein Reaktionsgefäß und Messen einer Menge von mindestens Wasser und/oder Chlorwasserstoff in einem während des Einbringens des chlorhaltigen Gases aus dem Reaktionsgefäß abgegebenen Abgangsgas, um einen Wassergehalt im Reaktionsgefäß zu bewerten.

## Revendications

1. Procédé de production de trichlorure de bore par une réaction entre du carbure de bore et un gaz de chlore, le procédé comprenant :
la mise en contact d'un gaz contenant du chlore, qui contient un gaz de chlore et a une teneur en eau de 1 ppm en volume ou moins, avec du carbure de bore à une température de 300 °C ou supérieure et de 400 °C ou inférieure, et le fait de permettre à l'eau contenue dans le carbure de bore de réagir avec le gaz de chlore dans le gaz contenant du chlore pour éliminer l'eau contenue dans le carbure de bore ; et
le fait de permettre au carbure de bore déshydraté lors de l'apport du gaz contenant du chlore de réagir avec le gaz de chlore pour générer du trichlorure de bore.

2. Procédé de production de trichlorure de bore selon la revendication 1, dans lequel le gaz contenant du chlore est mis en contact avec un dessiccatif contenant une zéolite.

3. Procédé de production de trichlorure de bore selon la revendication 1 ou 2, dans lequel l'apport du gaz contenant du chlore est réalisé sous une pression inférieure à la pression atmosphérique.

4. Procédé de production de trichlorure de bore selon l'une quelconque des revendications 1 à 3, dans lequel le gaz contenant du chlore inclut 20 % en volume ou plus et 60 % en volume ou moins de gaz de chlore, et un reste de gaz inerte.

5. Procédé de production de trichlorure de bore selon la revendication 4, dans lequel le gaz inerte est au moins l'un d'un gaz d'azote, d'argon ou d'hélium.

6. Procédé de production de trichlorure de bore selon l'une quelconque des revendications 1 à 5, dans lequel le carbure de bore est une poudre dont 100 % en masse passe à travers un tamis sec ayant une ouverture de maille de 5,60 mm et 65 % en masse ou plus ne passe pas à travers un tamis sec ayant une ouverture de maille de 1 mm.

7. Procédé de production de trichlorure de bore selon l'une quelconque des revendications 1 à 6, dans lequel une température de réaction entre le carbure de bore et le gaz de chlore est de 800 °C ou supérieure et de 1 100 °C ou inférieure.

8. Procédé de production de trichlorure de bore selon l'une quelconque des revendications 1 à 7, comprenant en outre :
la réalisation de l'apport du gaz contenant du chlore dans une cuve de réaction et la mesure d'une quantité d'au moins l'un de l'eau ou du chlorure d'hydrogène dans un gaz de décharge déchargé durant l'apport du gaz contenant du chlore à partir de la cuve de réaction pour évaluer une teneur en eau dans la cuve de réaction.
